# EUROPÄISCHE PATENTSCHRIFT

(11) **EP 0 665 436 B1**
(45) Veröffentlichungstag und Bekanntmachung des Hinweises auf die Patenterteilung: **04.03.1998**
(21) Anmeldenummer: 94112458.8
(22) Anmeldetag: 10.08.1994
(51) Int. Cl.: G01P 3/44

(54) **Impulsrad**
Pulse wheel
Roue pour générer des impulsions

(30) Priorität: 31.01.1994 DE 4402854
(43) Veröffentlichungstag der Anmeldung: 02.08.1995
(73) Patentinhaber: Firma Carl Freudenberg, 69469 Weinheim (DE)
(72) Erfinder: Eckel, Hans-Gerd, Dr., D-69514 Laudenbach (DE); Lannert, Berthold, D-64658 Fürth/Odw. (DE); Schmitt, Wolfgang, D-68519 Viernheim (DE)

(56) Entgegenhaltungen:
- EP-A- 0 323 159
- DE-A- 1 911 513
- US-A- 5 010 290

## Beschreibung

Die Erfindung betrifft ein mit einem Radialwellendichtring zusammengefaßtes Impulsrad für ein um eine Achse rotierbares Maschinenteil.

Ein Impulsrad diese Typs ist aus der DE PS 19 11 513 bekannt. Dabei ist zwischen der Dichtlippe des Radialwellendichtringes und dem relativ verdrehbaren Maschinenteil eine Zylinderhülse angeordnet, die eine Aufnahme für den Sensor beinhaltet, wobei das Impulsrad an den Radialwellendichtring festgelegt ist. Die Bauform ist schwierig herstellbar, empfindlich gegen äußere Beschädigungen und dadurch funktionsgefährdet.

Der Erfindung liegt die Aufgabe zugrunde, ein mit einem Radialwellendichtring zusammengefaßtes impulsrad zu zeigen, das einfach herstell- und montierbar ist und das sich darüberhinaus durch eine besonders gute Funktionssicherheit auszeichnet.

Diese Aufgabe wird erfindungsgemäß durch ein mit einem Radialwellendichtring zusammengefaßtes Impulsrad für ein um eine Achse rotierbares Maschinenteil gelöst, bei dem das Impulsrad eine Zylinderhülse aufweist, die auf das Maschinenteil auffschiebbar ist, bei dem der Radialwellendichtring mit einer Dichtlippe aus polymerem Werkstoff versehen ist, die auf der der Außenluft zugewandten Seite durch eine Kegelfläche begrenzt und in einer ersten axialen Position durch die Zylinderhülse berührt und in radialer Richtung aufweitbar ist und bei dem die Zylinderhülse aus der ersten axialen Position eine zweite axiale Position verschiebbar ist, in der die Dichtlippe den Maschinenteil unmittelbar anliegend berührt und die Zylinderhülse einen axialen Abstand von der Kegelfläche hat. Im Anlieferungszustand bilden der Radialwellendichtring und das Impulsrad eine in sich geschlossene Baueinheit, die besonders unempfindlich gegen mechanische Beschädigungen ist. Die Montage der Baueinheit erfordert kein vorheriges Zerlegen. Sie ist besonders einfach insofern, als der Innendurchmesser der Dichtlippe durch die Zylinderhülse elastisch aufgeweitet ist auf einen Durchmesser, der mit demjenigen des Maschinenteils in etwa übereinstimmt oder geringfügig größer ist als dieser. Die Dichtlippe kann dadurch besonders leicht und ohne die Gefahr einer Beschädigungen auf das abzudichtende Maschinenteil aufgeschoben werden. In bezug auf die Erzeugung von Massenprodukten ist das von großem Vorteil.

Die Zylinderhülse kann von der Dichtlippe in der ersten Position in axialer Richtung ganz durchgriffen sein. Beim Aufschieben des Radialwellendichtrings auf das abzudichtende Maschinenteil, bei dem es sich um ein Wellenende handeln kann, ergibt sich bei einer solchen Ausführung zuerst ein Berührungskontakt zwischen der Zylinderhülse und dem Maschinenteil. Die Dichtlippe wird dadurch vor einer Beschädigung durch das Maschinenteil geschützt. Während oder im Anschluß an ihre anschließende Überführung in die endgültige Position wird die Zylinderhülse aus ihrer ersten axialen Position in ihre zweite axiale Position überführt, in der sie einen axialen Abstand von der Kegelfläche hat. Die Dichtlippe gelangt dadurch in unmittelbaren Berührungskontakt zu der Oberfläche des abzudichtenden Maschinenteils und kann ihrer Bestimmung entsprechend in Verwendung genommen werden.

Die Dichtlippe der zur Anwendung gelangenden Radialwellendichtringe besteht aus polymerem Werkstoff, beispielsweise aus Gummi oder PTFE. Derartige Werkstoffe sind relaxationsgefährdet. Ihre Aufweitung auf einen Durchmesser, der größer ist als derjenige des abzudichtenden Maschinenteils, muß deshalb kontrolliert und auf einen Wert begrenzt werden, der die zur Erzielung eines guten Abdichtungsergebnisses erforderliche Mindestanpressung an das abzudichtende Maschinenteil noch sicher gewährleistet. Formbeständige Zylinderhülsen mit einem Innendurchmesser, der größer ist als derjeinige des Maschinenteils dürfen aus diesem Grunde nur eine geringe Wandstärke in radialer Richtung haben. Die Festlegung im Einzelnen kann aufgrund einfacher Versuche erfolgen.

Die Zylinderhülse kann in axialer Richtung vergleichsweise kürzer und in radialer Richtung vergleichsweise dicker als die vorstehend beschriebene Ausführung gestaltet werden, d.h. in mechanischer Hinsicht wesentlich robuster, wenn sie die Hohlkegelfläche in der ersten Position in einem Abstand T von der inneren Begrenzungskante der Dichtlippe berührt. Die Dichtlippe hat an dieser Stelle einen vergleichsweise größeren Durchmesser. Dennoch ergibt sich bei einer solchen Ausführung eine ausgezeichnete radiale Abstützung der Dichtlippe durch die Zylinderhülse während ihrer Lagerung und zu Beginn der Montage. Es ist dadurch auch in einem solchen Falle nicht mehr erforderlich, die Dichtlippe zu Beginn ihrer Montage in dem bisherigen Maße in radialer Richtung durch das abzudichtende Maschinenteil aufzuweiten mit der dabei latent vorhandenen Gefahr einer Beschädigung der für die Abdichtung besonders wichtigen inneren Begrenzungskante. Der Abstand T sollte zweckmäßig so bemessen sein, daß die innere Begrenzungskante und das Maschinenteil einen im wesentlichen übereinstimmenden Durchmesser haben.

Es besteht auch die Möglichkeit, daß die Zylinderhülse durch in Umfangsrichtung verteilte, in axialer Richtung vorstehende Federzungen gebildet ist, die unabhängig voneinander in radialer Richtung bewegbar sind. Die Zylinderhülse kann im Wurzelbereich der Federzungen einen Innendurchmesser haben, der an denjenigen des abzudichtenden Maschinenteils angepaßt ist um eine gute Zentrierung des fertig montierten Impulsrades zu gewährleisten. Dabei werden die Federzungen zweckmäßig so dimensioniert und mit der Federelastizität des sie bildenden Werkstoffes abgestimmt, daß die innere Begrenzungskante der Dichtlippe während der Lagerung des Radialwellendichtrings auf einen Durchmesser gehalten wird, der mit demjenigen des abzudichtenden Maschinenteils übereinstimmt und oder sogar geringfügig geringer oder größer ist. Unerwünschte Relaxationserscheinungen der Dichtlippe während langer Lagerzeiten werden dadurch vermieden. Die mechanische Widerstandsfähigkeit der Federzungen kann gleichwohl erheblich sein und die mechanische Widerstandsfähigkeit der Dichtlippe während der Montage entsprechend vergrößern. Die Verwendung von Automaten zur Durchführung der Montage wird dadurch wesentlich vereinfacht. Das vordere Ende der Federzungen wird hierbei auf das Ende des abzudichtenden Maschinenteils aufgeschoben, wobei sich eine radiale Aufweitung der Dichtlippe ergibt. Diese ist nur bis zur Überführung der Zylinderhülse in ihre zweite Position wirksam und kann in dieser kurzen Zeitspanne nicht zum Auftreten von Relaxationserscheinungen des die Dichtlippe bildenden Dichtungswerkstoffes führen. Die Länge der Federzungen ist beliebig. Sie kann auch so bemessen sein, daß die Dichtlippe in der ersten Position der Zylinderhülse ganz durchgriffen ist.

Die Zylinderhülse läßt sich besonders einfach aus ihrer ersten, axialen Position in die zweite Position überführen, wenn sie mit einer Verlängerung versehen ist, die das Maschinenteil im Bereich seiner Stirnfläche zumindest anteilig übergreift. Die Verlängerung kann aus einem Flansch bestehen, der zwischen dem Maschinenteil und einem damit verbindbaren Sekundärelement verklemmbar ist. Sie stellt sicher, daß während der bestimmungsgemäßen Verwendung keine axialgerichtete Relativverlagerung mehr möglich ist. Für eine korrekte Erfassung der von dem Impulsrad erzeugten Signale ist das von großem Vorteil.

Die Zylinderhülse kann mit einem Ringabschnitt verbunden sein, der den Radialwellendichtring zumindest in der ersten Position teilweise außenseitig übergreift. Der Ringabschnitt kann hohlzylindrisch gestaltet und mit gleichmäßigen in Umfangsrichtung verteilten Unregelmäßigkeiten versehen sein, beispielsweise Wanddurchbrüchen, die durch Sensoren erfaßbar sind. Die Unregelmäßigkeiten können auch durch in Umfangsrichtung verteilte Magnetpole mit abwechselnder Auswirkung der Polarisierung gebildet sein. Relativverdrehungen und Drehzahlveränderungen des abzudichtenden Maschinenteils lassen sich dadurch besonders zuverlässig erfassen.

Eine in sich funktionsfähige Baueinheit wird erhalten, wenn der Radialwellendichtring mit einem Sensor verbunden ist, der den Ringabschnitt zumindest an einer Umfangsstelle übergreift und durch die Unregelmäßigkeiten des Ringabschnittes aktivierbar ist. Sie zeichnet sich durch eine besonders gute Betriebssicherheit aus, wenn der Radialwellendichtring mit einem radial nach außen vorstehenden Halteflansch versehen ist, wobei der Halteflansch durch einen Versteifungsflansch festlegbar ist, der den Sensor bereits beinhaltet. Der Halteflansch kann beispielsweise aus Aluminiumdruckguß bestehen und die gesamte Baueinheit außenseitig umschließen und vor einer Fremdeinwirkung schützen.

Die Erfindung wird nachfolgend anhand der Zeichnungen weiter verdeutlicht. Es zeigen:

Fig. 1 eine erste Bauform des mit einem Radialwellendichtrings zusammengefaßten Impulsrads, bei dem sich die Zylinderhülse in der ersten Position befindet.

Fig. 2 die Bauform gemäß Fig. 1, bei der sich die Zylinderhülse in der zweiten Position befindet.

Fig. 3 eine Bauform ähnlich wie Fig. 1, bei der sich die Zylinderhülse in der ersten Position befindet.

Fig. 4 die Bauform gemäß Fig. 3, bei der sich die Zylinderhülse in der zweiten Position befindet.

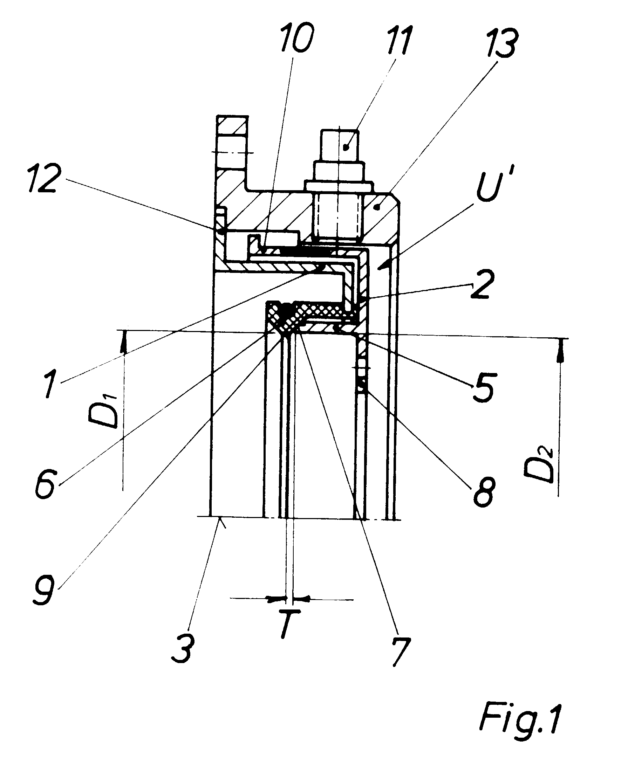

Die Fig. 1 bis 4 zeigen die dargestellten Bauformen längsgeschnitten jeweils nur zur Hälfte.

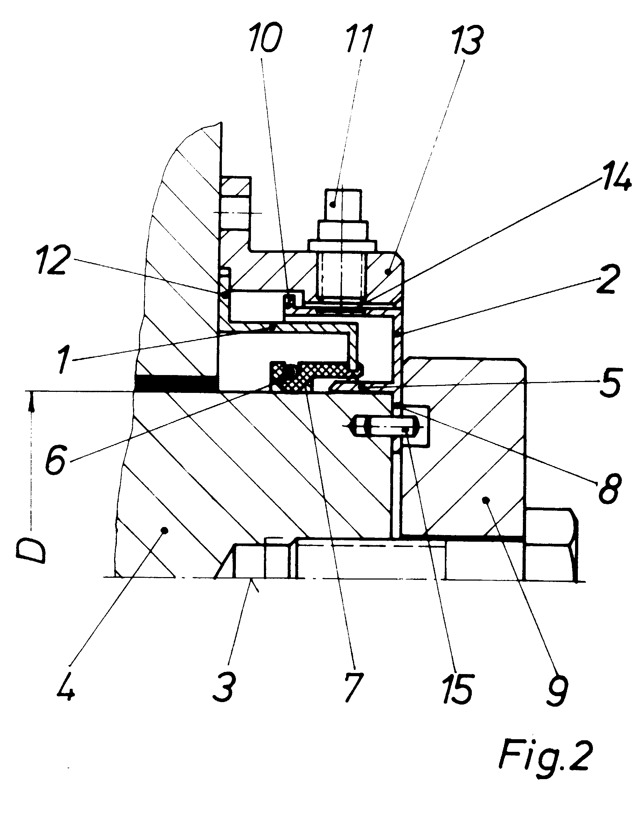

In Fig. 1 ist ein mit einem Radialwellendichtring 1 zusammengefaßtes Impulsrad 2 für eine um eine Achse 3 rotierbares Maschinenteil 4 gezeigt, bei dem das Impulsrad 2 eine Zylinderhülse 5 aufweist, die von Hand auf das Maschinenteil 4 aufschiebbar ist, wobei der Radialwellendichtring 1 mit einer Dichtlippe 6 aus polymerem Werkstoff versehen ist, die auf der der Außenluft zugewandten Seite durch eine Kegelfläche 7 begrenzt und in der gezeigten, ersten axialen Position der Zylinderhülse 5 durch diese berührt und in radialer Richtung aufgeweitet ist auf einen Innendurchmesser D 1, der im wesentlichen mit dem Außendurchmesser D des während der bestimmungsgemäßen Verwendung abzudichtenden Maschinenteils 4 (Fig. 2) übereinstimmt. Die innere Begrenzungskante 9 der Dichtlippe 6 ist dadurch während der Montage keiner besonders großen mechanischen Belastung ausgesetzt. Beschädigungen lassen sich dadurch leicht vermeiden.

Der axiale Abstand T, der sich in der ersten Position zwischen dem vorderen Ende der Zylinderhülse 5 und der inneren Begrenzungskante 9 der Dichtlippe 6 ergibt, ist so bemessen und mit dem Neigungswinkel der Kegelfläche 7 in Übereinstimmung gebracht, daß sich während der Lagerung keine nennenswerte Aufweitung des Durchmessers D 1 über den Durchmesser D hinaus ergibt. Relaxationserscheinungen des die Dichtlippe 6 bildenden, polymeren Werkstoffs werden dadurch während der Lagerung weitgehend ausgeschlossen. Unmittelbar nach Inbetriebnahme der Dichtung wird ein gutes Abdichtungsergebnis erreicht.

Die Zylinderhülse 5 ist am rechten Ende ihres Profils mit einer radial nach innen vorstehenden Verlängerung 8 versehen, die das Maschinenteil 4 nach der Montage im Bereich seiner Stirnfläche anteilig übergreift und sicherstellt, daß die Zylinderhülse 5 während der Montage selbsttätig aus ihrer ersten Position (Fig. 1) ) in ihre zweite Position (Fig. 2) überführt wird, in der sie einen Abstand von der Kegelfläche 7 hat. Die Dichtlippe 6 wird hierdurch entspannt mit der Folge, daß sie mit der für die Abdichtung des Maschinenteils vorgesehenen Anpreßkraft direkt an dieses angepreßt wird. Während der bestimmungsgemäßen Verwendung im Bereich des Dichtspaltes entstehende Reibungswärme kann dadurch problemlos über das Maschinenteil 4 abgeführt werden.

Die erste Position der Zylinderhülse 5 ist auch dadurch definiert, daß eine axiale Anschlagberührung zwischen dem Impulsrad 2 und dem Radialwellendichtring 1 vorliegt, die eine Relativverlagerung verhindert. Die Stelle, an der sich die Anschlagberührung ergibt, ist in Fig. 1 mit U' markiert. Nach der Überführung der Zylinderhülse 5 in die zweite Position (Fig. 2) ist keine derartige Anschlagberührung zwischen dem Impulsrad 2 und dem Radialwellendichtring 1 vorhanden. Beide Teile sind dadurch relativ verdrehbar. Eine nachfolgende, axial gerichtete Relativverlagerung der beiden Teile in bezug zueinander ist nicht mehr möglich, weil das Impulsrad 2 einerseits zwischen der Stirnfläche des Maschinenteils 4 und andererseits an dem verschraubten Sekundärelement 9 eingespannt ist. Hierzu ist die Zylinderhülse 5 mit der Verlängerung 8 versehen, die das Maschinenteil 4 im Bereich seiner Stirnfläche anteilig übergreift und als Flansch ausgebildet ist. Die Dichtlippe bildet einen Bestandteil des Radialwellendichtringes und ist dem abzudichtenden Maschinenteil unverrückbar zugeordnet.

Die Zylinderhülse 5 ist mit einem Ringabschnitt 10 verbunden, der den Radialwellendichtring 1 in der ersten Position teilweise außenseitig übergreift und als Hohlzylinder ausgebildet ist. Dieser ist außenseitig mit gleichmäßig in Umfangsrichtung verteilen Unregelmäßigkeiten 14 versehen, beispielsweise Durchbrechungen, die in geringem radialen Abstand an einem Sensor 11 vorbeiführbar sind. Dieser ist im Versteifungsflansch 13 befestigt, der den Hohlzylinder außenseitig ganz umschließt und es gestattet, den radial nach außen vorstehenden Halteflansch 12 des Radialwellendichtrings mit einer Gehäusewandung zu verspannen, die von dem relativ verdrehbaren Maschinenteil 4 durchdrungen ist. Bei der Gehäusewandung kann es sich beispielsweise um ein Motorgehäuse handeln. Ein Paßstift 15 dient als zusätzliche Sicherung um Relativverdrehungen des Impulsrads 2, bezogen auf das Maschinenteil 4, zu verhindern.

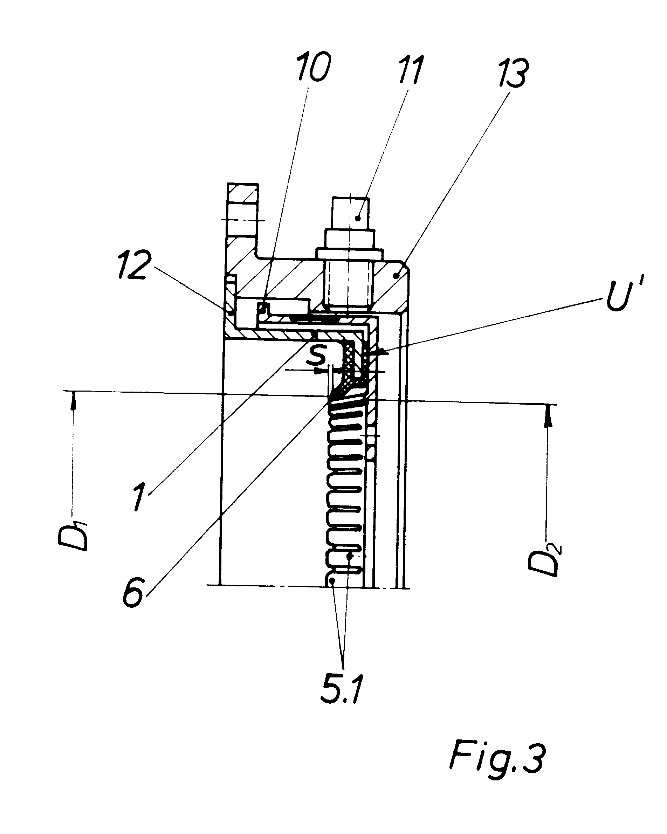

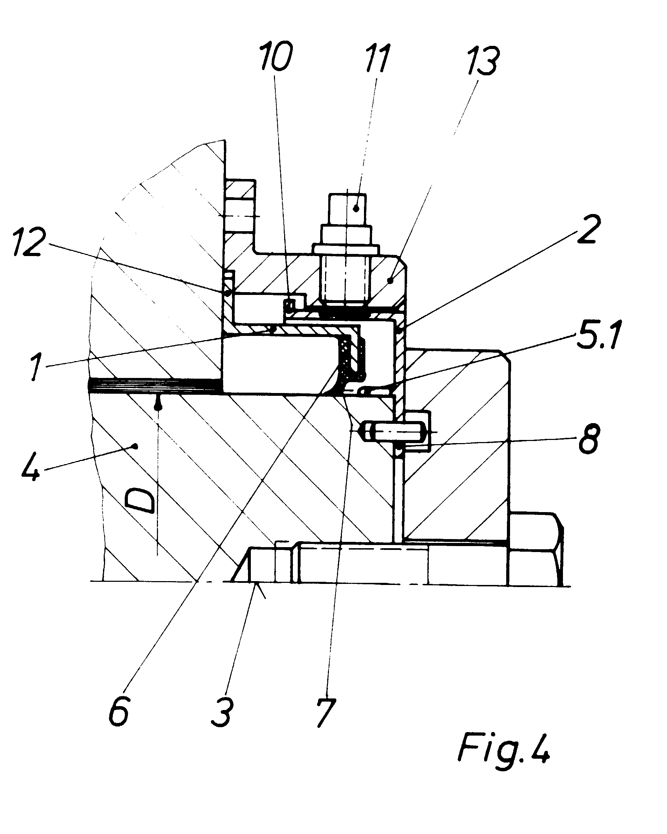

Die Fig. 3 und 4 nehmen bezug auf eine Bauform, die der vorstehend beschriebenen in vielen Teilen ähnlich ist. Die Dichtlippe 6 besteht jedoch nicht aus Gummi, wie vorstehend beschrieben, sondern aus PTFE, und ist auf einer Zylinderhülse 5 abgestützt, die durch gleichmäßig in Umfangsrichtung verteilte Federzungen 5.1 gebildet ist. Die Federzungen 5.1 sind so bemessen, daß die Zylinderhülse 5 in der ersten Position die Dichtlippe 6 mit einem geringen Überstand S auf ihrer gesamten axialen Länge übergreift und auf einem Innendurchmesser D 1 abgestützt, der im wesentlichen mit dem Durchmesser D des während der bestimmungsgemäßen Verwendung abzudichtenden Maschinenteils 4 übereinstimmt. Dabei ergibt sich eine radial nach innen gerichtete, elastische Verformung der Federzungen 5.1. Diese haben an ihrer Wurzel einen Innendurchmesser D 2, der geringfügig größer ist als der Außendurchmesser des abzudichtenden Maschinenteils 4. Die durch die Federzungen 5.1 gebildete Zylinderhülse 5 kann dadurch problemlos auf die stirnseitige Abschrägung des abzudichtenden Maschinenteils 4 zu Montagezwecken aufgeschoben werden, wobei sich eine radiale Aufweitung der Dichtlippe 6 ergibt. Gleichzeitig kehrt die Zylinderhülse 5 in die zylindrische Gestalt zurück (Fig. 4) die ihr bei der Herstellung verliehen wurde. Sie ist im Bereich des vorstehenden Endes innen- und außenseitig abgerundet, um das Aufschieben auf das Maschinenteil 4 einerseits zu vereinfachen und andererseits Beschädigungen der Dichtlippe 6 beim Einfügen in deren Innendurchmesser auszuschließen. Im weiteren Verlauf des Auffügens auf das stirnseitige Ende des abzudichtenden Maschinenteils 4 gelangt die nach innen vorstehende Verlängerung 8 des Impulsrads 2 mit der Stirnfläche des Maschinenteils 4 in Eingriff, was eine noch weitergehende Relativverlagerung in axialer Richtung verhindert. Die über den Versteifungsflansch 13 und den Halteflansch 12 in den Radialwellendichtring 1 eingeleiteten, axialgerichteten Fügekräfte führen daher dazu, daß die Dichtlippe von der Zylinderhülse 5 heruntergleitet und in unmittelbaren Eingriffskontakt mit dem abzudichtenden Maschinenteil 4 gelangt. In der endgültigen Festlegungsposition des Radialwellendichtrings 1 ergibt sich ein axialer Abstand zwischen der Zylinderhülse 5 und der Kegelfläche 7 der Dichtlippe 6. Ein Beschädigung der Dichtlippe 6 durch die Zylinderhülse 5 ist dadurch während der bestimmungsgemäßen Verwendung ausgeschlossen.

Auch bei der in den Fig. 3 und 4 gezeigten Ausführung ist das Impulsrad 2 auf seinem gesamten Außenumfang durch einen Versteifungsflansch 13 umschlossen und geschützt. Dieser enthält zugleich einen Sensor 11, der geeignet ist, die Drehzahl des Maschinenteils 4 zu erfassen.

## Patentansprüche

1. Mit einem Radialwellendichtring (1) zusammengefaßtes Impulsrad (2) für ein um eine Achse (3) rotierbares Maschinenteil (4) , bei dem das Impulsrad (2) eine Zylinderhülse (5) aufweist, die auf das Maschinenteil (4) aufschiebbar ist, bei dem der Radialwellendichtring (1) mit einer Dichtlippe (6) aus polymerem Werkstoff versehen ist, die auf der der Außenluft zugewandten Seite durch eine Kegelfläche (7) begrenzt und in einer ersten axialen Position der Zylinderhülse (5) durch diese berührt und in radialer Richtung aufgeweitet ist, bei dem die Zylinderhülse (5) aus der ersten axialen Position in eine zweite axiale Position verschiebbar ist, in der die Dichtlippe (6) das Maschinenteil (4) unmittelbar anliegend berührt und die Zylinderhülse (5) einen axialen Abstand von der Kegelfläche (7) hat.

2. Gegenstand nach Anspruch 1, dadurch gekennzeichnet, daß die Zylinderhülse (5) die Dichtlippe (6) in der ersten Position in axialer Richtung ganz durchgreift.

3. Gegenstand nach Anspruch 1, dadurch gekennzeichnet, daß die Zylinderhülse (5) die Kegelfläche (7) in der ersten Position in einem Abstand T von der inneren Begrenzungskante (9) der Dichtlippe (6) berührt.

4. Gegenstand nach Anspruch 3, dadurch gekennzeichnet, daß der Abstand T so bemessen ist, daß die innere Begrenzungskante (9) und das Maschinenteil (4) bei bestimmungsgemäßer Verwendung einen im wesentlichen übereinstimmenden Durchmesser haben.

5. Gegenstand nach einem der Ansprüche 1 bis 4, dadurch gekennzeichnet, daß die Zylinderhülse (5) durch in Umfangsrichtung verteilte, in axialer Richtung vorstehende Federzungen gebildet ist, die unabhängig voneinander in radialer Richtung bewegbar sind.

6. Gegenstand nach einem der Ansprüche 1 bis 5, dadurch gekennzeichnet, daß die Zylinderhülse (5) mit einer Verlängerung (8) versehen ist, die im Verwendungsfall das Maschinenteil (4) im Bereich seiner Stirnfläche zumindest anteilig übergreift.

7. Gegenstand nach Anspruch 6, dadurch gekennzeichnet, daß die Verlängerung (8) aus einem Flansch besteht und daß der Flansch zwischen dem Maschinenteil (4) und einem damit verbindbaren Sekundärelement (9) verklemmbar ist.

8. Gegenstand nach einem der Ansprüche 1 bis 7, dadurch gekennzeichnet, daß die Zylinderhülse (5) mit einem Ringabschnitt (10) verbunden ist, der den Radialwellendichtring (1) zumindest in der ersten Position teilweise außenseitig übergreift.

9. Gegenstand nach Anspruch 8, dadurch gekennzeichnet, daß der Radialwellendichtring (1) mit einem Sensor (11) verbunden ist, der den Ringabschnitt (10) zumindest an einer Umfangsstelle übergreift und durch den Ringabschnitt (10) aktivierbar ist.

10. Gegenstand nach Anspruch 9, dadurch gekennzeichnet, daß der Radialwellendichtring (1) mit einem radial nach außen vorstehenden Halteflansch (12) versehen ist und daß der Halteflansch (12) durch einen Versteifungsflansch (13) festlegbar ist, der den Sensor (11) beinhaltet.

## Claims

1. A pulse wheel (2) combined with a radial shaft sealing ring (1), for a machine part (4) that can rotate about an axis (3), in which the pulse wheel (2) has a cylindrical sleeve (5) that can be pushed onto the machine part (4), in which the radial shaft sealing ring (1) is provided with a sealing lip (6) made of polymer material which, on the side facing the outside air, is bounded by a conical face (7) and, in a first axial position of the cylindrical sleeve (5), is touched by the latter and expanded in the radial direction, in which the cylindrical sleeve(5) can be displaced out of the first axial position into a second axial position, in which the sealing lip (6) touches the machine part (4), resting directly thereon, and the cylindrical sleeve (5) has an axial spacing from the conical face(7).

2. An article according to claim 1, characterized in that in the first position the cylindrical sleeve (5) reaches right through the sealing lip (6) in the axial direction.

3. An article according to claim 1, characterized in that in the first position the cylindrical sleeve (5) touches the conical face (7) at a distance T from the inner boundary edge (9) of the sealing lip (6).

4. An article according to claim 3, characterized in that the distance T is dimensioned such that, given proper use, the inner boundary edge (9) and the machine part (4) have substantially corresponding diameters.

5. An article according to any one of claims 1 to 4, characterized in that the cylindrical sleeve (5) is formed by spring tongues that are distributed in the circumferential direction, project forward in the axial direction and can be moved independently of one another in the radial direction.

6. An article according to any one of claims 1 to 5, characterized in that the cylindrical sleeve (5) is provided with an extension (8) which, when used, at least to some extent engages over the machine part (4) in the region of its front face.

7. An article according to claim 6, characterized in that the extension (8) comprises a flange, and in that the flange may be clamped between the machine part (4) and a secondary element (9) that may be joined thereto.

8. An article according to any one of claims 1 to 7, characterized in that the cylindrical sleeve (5) is joined to an annular section (10) which, at least in the first position, partly engages on the outside over the radial shaft sealing ring (1).

9. An article according to claim 8, characterized in that the radial shaft sealing ring (1) is joined to a sensor (11) that engages over the annular section (10), at least at one circumferential point, and may be activated by the annular section (10).

10. An article according to claim 9, characterized in that the radial shaft sealing ring (1) is provided with a radially outwardly projecting retaining flange (12), and in that the retaining flange (12) may be fixed by a stiffening flange (13) which contains the sensor (11).

## Revendications

1. Roue (2) pour générer des impulsions unie à un joint d'étanchéité de type radial (1) pour une pièce de machine (4) pouvant tourner autour d'un axe (3), dans laquelle la roue (2) pour générer des impulsions comprend une douille cylindrique (5) qui peut être montée sur la pièce de machine (4), dans laquelle le joint d'étanchéité de type radial (1) est pourvu d'une lèvre d'étanchéité (6) en matière polymère qui est limitée par une surface conique (7) sur le côté tourné vers l'air extérieur, qui est touchée, dans une première position axiale de la douille cylindrique (5), par la douille cylindrique (5), et qui est élargie dans la direction radiale, dans laquelle la douille cylindrique (5) peut être déplacée de la première position axiale dans une seconde position axiale dans laquelle la lèvre d'étanchéité (6) est en contact direct avec la pièce de machine (4) et la douille cylindrique (5) présente une distance axiale par rapport à la surface conique (7).

2. Objet selon la revendication 1, caractérisé en ce que, dans la première position, la douille cylindrique (5) traverse toute la lèvre d'étanchéité (6) dans la direction axiale.

3. Objet selon la revendication 1, caractérisée en ce que, dans la première position, la douille cylindrique (5) est en contact avec la surface conique (7) à une distance T de l'arête de limitation interne (9) de la lèvre d'étanchéité (6).

4. Objet selon la revendication 3, caractérisé en ce que la distance T est dimensionnée de manière à ce que l'arête de limitation interne (9) et la pièce de machine (4) aient, lors de l'utilisation conforme aux prescriptions, un diamètre essentiellement égal.

5. Objet selon l'une des revendications 1 à 4, caractérisé en ce que la douille cylindrique (5) est formée par des langues élastiques saillant dans la direction axiale et réparties dans la direction circonférentielle, qui sont mobiles indépendamment les unes des autres dans la direction radiale.

6. Objet selon l'une des revendications 1 à 5, caractérisé en ce que la douille cylindrique (5) est pourvue d'un prolongement (8) qui, dans le cas d'utilisation, empiète sur au moins une portion de la pièce de machine (4) dans la région de son côté frontal.

7. Objet selon la revendication 6, caractérisé en ce que le prolongement (8) est formé par une bride et en ce que la bride peut être coincée entre la pièce de machine (4) et un élément secondaire (9) pouvant être relié à cette dernière.

8. Objet selon l'une des revendications 1 à 7, caractérisé en ce que la douille cylindrique (5) est reliée à un segment annulaire (10) qui empiète partiellement le côté extérieur du joint d'étanchéité de type radial (1), au moins dans la première position.

9. Objet selon la revendication 8, caractérisé en ce que le joint d'étanchéité de type radial (1) est relié à un capteur (11) qui empiète le segment annulaire (10) au moins en un endroit de sa circonférence et peut être activé par le segment annulaire (10).

10. Objet selon la revendication 9, caractérisé en ce que le joint d'étanchéité de type radial (1) est pourvu d'une bride de maintien saillant radialement vers l'extérieur et en ce que la bride de maintien (12) peut être fixée par une bride de renforcement (13) qui contient le capteur (11).
